# EUROPEAN PATENT SPECIFICATION

(11) **EP 1 396 666 B1**
(45) Date of publication and mention of the grant of the patent: **27.04.2005**
(21) Application number: 02380216.8
(22) Date of filing: 22.10.2002
(51) Int. Cl.: F16K 1/30, F16K 15/18

(54) **Free exit adaptor to connect consumption devices to containers containing liquefied petroleum gases**
Adapter zum Anschliessen von Verbrauchern an LPG-Tanks
Adaptateur de sortie libre pour connecter des dispositifs de consommation à des reservoirs de gpl

(30) Priority: 03.09.2002 ES 200202159 U
(43) Date of publication of application: 10.03.2004
(73) Proprietor: REPSOL BUTANO, S.A., 28015 Madrid (ES)
(72) Inventor: de Andrés Alonso, Raimundo, 28030 Madrid (ES)
(74) Representative: Riera Blanco, Juan Carlos

(56) References cited:
- EP-A- 1 174 784
- ES-U- 1 043 548
- FR-A- 2 793 297

## Description

### Objective of the Invention

The present invention refers to a free exit adaptor to connect consumption devices to containers containing liquefied petroleum gases. It provides novel characteristics and notable advantages with respect to known means used for the same ends in the current state of the art.

To be more specific, the invention proposes the development of a free exit adaptor device to connect a consumption gas device to the valves of refillable bottles of liquefied petroleum gases, making sure that there is increased safety and that it is easy to use for the user, given that it is controlled by an external lever that adopts two opposite positions according to whether there is a completely open flow of gas or a completely closed flow of gas. The drive of the valve is operated by a rod that can move up and down in an axial position inside the body of the adaptor. The rod's movement is facilitated or impeded depending on the position of the external lever mentioned above.

The field of application for this invention is the industrial sector dedicated to making apparatus or devices for specific use in the container industry and/or distribution of gases derived from petroleum.

### Background and Summary of the Invention

It is known that there are already a variety of adaptor devices on the market that connect the different consumption devices to the valves of refillable bottles containing liquefied petroleum gas and that the characteristics of such devices vary depending on the device and the type of bottle used.

One peculiarity common to all these devices is the fact that they must be designed to assure a level of safety and trust fitting for the use they are destined for, taking into account the specific physical and chemical characteristics of the type of gas being handled. Therefore, most manufacturers of this type of device tend to equip them with a structure easy to use and that complies with the desired safety requirements.

In the specific case of low-energy devices, it is known that there exist adaptors that fulfil the requirements of safety and ease of use perfectly. To be more specific, document ES-U-1 043 548 of the same applicant that the pre-distinguishing part of claim 1 is based on, describes an adaptor device for bottles containing gas with conventional valves to low-energy devices, where a rod has been incorporated in the body of the adaptor. This rod can be moved axially so that its position causes the container's gas exit valve to open or close. The position of the rod is regulated by means of a control activated manually on the outside whose internal edge has been lowered according to its longitudinal direction, in order to make an eccentric portion with respect to its axis, which is situated above the head of the rod, which is moved axially, so that turning this control determines the limits of the gas exit valve's operating rod's movement. The valve is mounted into the container.

The present invention has been conceived to perfect the objective described in the said document Utility Model, given that it develops an adaptor device whose general characteristics mostly match the general characteristics of the adaptor of said document, even if the user's operating control has been substituted for a combined lever and cross-sectional rod, the latter being configured so that its most internal part has a tapered section able to act on the head of the axially movable rod, whereby the rod is pushed downwards to open the gas exit valve or remains free to be pushed upwards to allow the gas exit valve to assume its closed position. The external operating lever adopts two extreme positions, corresponding to the opening and closing of the gas exit valve from the refillable container to the device.

### Brief Description of the Drawings.

These and other characteristics and advantages of the invention will become clearer from the following detailed description of the preferred embodiment given as an illustrative and non-limited example with reference to the figures that are adjoined, where:
- Figure 1: is a perspective view of a cross section of the adaptor sectioning it into four, and
- Figures 2 and 3: show views in a cross-sectional cut showing the adaptor closed and open, respectively.

### Description of a Preferred Embodiment

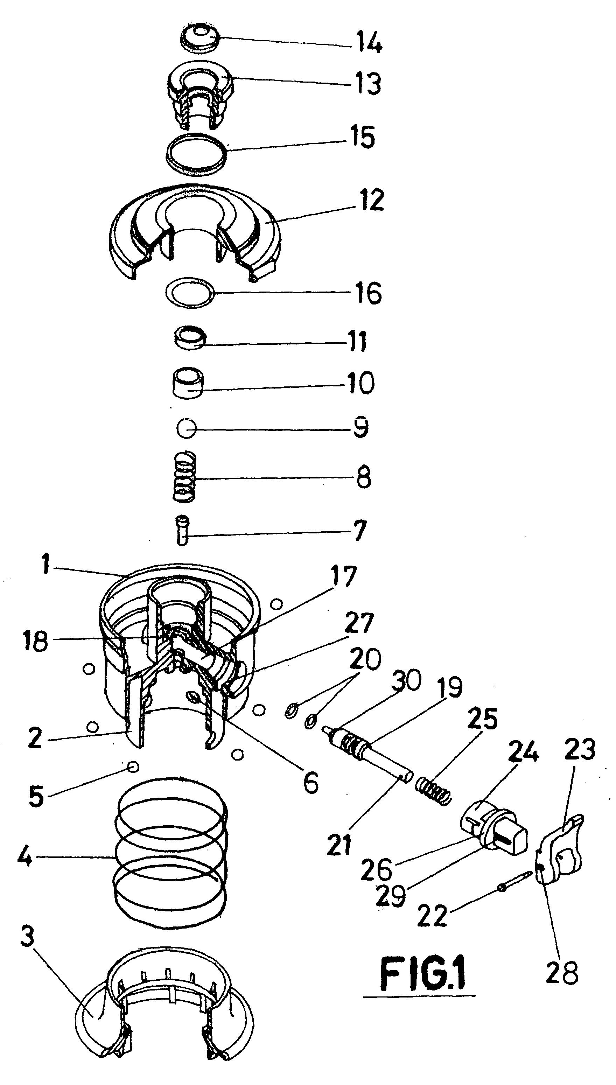

According to the above, the detailed description of the preferred embodiment will be given using as a base the drawings attached, and using the same numerical references to designate the same or similar parts. Therefore, with reference first to Figure 1, we can see the cross section of the adaptor, divided into a quarter so as to observe in greater detail the characteristics that distinguish each of the elements that make up the adaptor. In this sense, the invention device is made up of a body (1) configured appropriately in which the rest of the elements are fitted. This body includes in its lower part a chamber (2) destined to couple, with the help of a manually movable ring (3), on the exit valve to the container in a way known unto itself, vertically against spring action (4). This coming together is carried out with the help of various ball bearings (5) that are incorporated in holes (6) cut for the purpose into the wall of the chamber (2) of the body (1), and which can also be kept in a shaft provided for this purpose on the exterior of the exit valve of the container bottle (not shown).

The axially movable rod is shown with the numerical reference (7) and above this there is a spring (8), a ball bearing (9), a guiding ferrule (10) and a watertight washer (11). There is also an upper shutting lid (12) as well as the means to connect to the consumption device, this being a threaded nozzle (13), fitted with an upper protection washer (14). Other washers (15) and (16) are used to be watertight once the adaptor has been made, as will be seen later in relation to the following figures.

In the body (1) of the adaptor, there is also a cross passage (17), which has been extended radially, which ends outside and extends from the hold (18) of the axially movable rod (7) and goes along in a linear manner on the other side to beyond the hold (18). This passage (17) has been put there because it includes the means of allowing the opening and closing of the gas exit valve and basically consists of a cross-sectional rod (19), adapted to retract inside said cross passage (17). The rod (19) has an intermediary cylindrical portion with a greater diameter and ring-shaped rabbets to allow watertight washers (20) to be placed here. The part of the rod inside carries on with a short tapered portion (30), while near its other extreme outside there will be another cross-sectional hole (21) that will host a pin (22) linked to a lever (23) and serving as a turning axis for the lever. A ferrule (24) has been configured with a blind axial hole, able to host in its interior a large portion of one end of the cross-sectional rod (19) and a spring (25) joined to this end of the cross-sectional rod, while the ferrule has been equipped with a flat circular staggered expansion on the outside, indicated by the numerical reference (26), serving as a limit in its coupling to the radial cross passage (17) of the body (1), while there is also an elastic projection that can be held in a rabbet (27) made for this purpose inside said cross passage (17) and which stops said ferrule coming out once the adaptor has been put together.

As has been said above, the lever (23) can adopt two extreme, inverted positions that determine whether the gas is allowed to pass or not through the exit valve of the container. If we look at Figure 1, said lever (23) ends in the form of two separated parallel walls for its coupling to the extreme levelled exterior of the ferrule (24) and, through said walls, to a hole ready to accommodate the pin (22). In turn, the ferrule (24) also has a wide opening (29) in the extreme part destined to couple with the lever (23), and through which the pin (22) passes transversally and can move lengthways when the lever is on top of the pin. With the arrangement adopted by the hole (28) that is much nearer to one side than the other, the lever can cause the pin (22) to move across the wide opening (29) of the ferrule (24). Along with this, and given that the pin (22) is in turn fixed in the hole (21) of the rod (19), the radial displacement of the rod will occur through the inside of the cross passage (17) between extreme limits corresponding to both extreme positions of said lever (23).

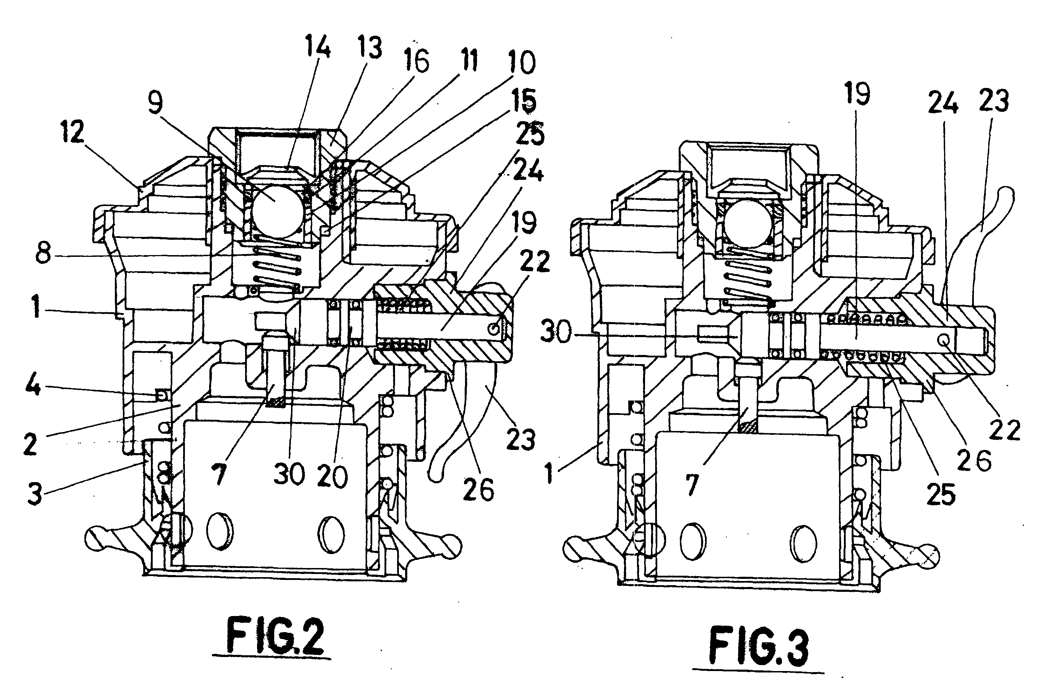

Once the various components of the adaptor have been described, reference will be made to Figures 2 and 3 of the drawings where there are cross-section cuts of the assembled adaptor corresponding to the respective closed and open positions.

And so, taking Figure 2 first, we can see the adaptor when closed, as has been said. The various components are shown in the body (1), part of which corresponds to a conventional embodiment, as is the case of the vertically displaceable lower ring (3), coupled to the chamber (2) against the action of the spring, while on the opposite side the nozzle (13) is shown forming a watertight union with the body through the washer (15), with the internal guiding ferrule (10) situated in its place, forming a watertight union with the nozzle through the washer (16) and with the ball bearing (9) that closes the passage of gas driven toward its watertight union with the washer (11) through the compression spring (8), and all this being closed from above by the lid (12); on the other side, the activating mechanisms of the vertically displaceable axial rod (7) appear inside the passage (17) of the body (1) (see Figure 1), with the ferrule (24) back in its place, while the cross-sectional rod (19) appears with its most external part held inside said ferrule and with its most internal part occupying a position over said axial rod (7) without its tapered portion (30) affecting the head of the rod (7) mentioned. The watertight washers (20) are mounted on the ring-shaped holders of the cross-sectional rod (19) and the lever, linked to the cross-sectional rod (19) and the ferrule (24) through the pin (22), appears in a lowered position.

According to the above, the position of the adaptor that appears in Figure 2 corresponds to the closed position, i.e., it is not supplying gas to the consumption device that has been connected to the exit nozzle (13). This is in line with the fact that that position of the lever (23) is such that the hole (28) of the lever (and therefore the pin (22) linked to the cross-sectional rod (19)) is as far away as possible from the expansion (26) of the ferrule (24) and so said cross-sectional rod (19) is pushed as far outside as possible, against the action of the spring (25) that is compressed inside the ferrule. Under these conditions, the axial rod (7) is in a high position, given that the tapered portion (30) does not stop it and thus the gas exit valve incorporated into the container is not activated.

When it is necessary to provide the consumption device connected to the adaptor with gas, the opening operation is carried out whereby the lever (23) is put into the opposite position, i.e., the position shown in Figure 3. In effect, the manual change to this position means that the lever (23) has its hole (28) (and therefore the pin 22) in the nearest position possible to the expansion (26) of the ferrule, allowing the cross-sectional rod (19), pushed by the elastic recuperation of the spring (25), to move inside and so the tapered portion (30) of said rod (19) advances and pushes the vertically displaceable rod (7) progressively until it is situated beyond the head of said rod, which is maintained in its low position by means of the cylindrical section of greater diameter of the rod (19). In this position, the opening of the container's exit valve is assured, thanks to the pressure exercised on it by the axial rod (7) .

As can be imagined, the embodiment of the adaptor described gives a totally safe device, free of movable pieces or elements that might get stuck, exempt from operations of maintenance, and summarily easy to use. It is thus an improvement on the types of devices that technology currently has to offer.

It is not considered necessary to compound this description for a person skilled in the art to understand its scope and the advantages derived from the invention, to develop and put the objective into practice.

Nevertheless, it must be understood that the invention has been described in accordance with a preferred embodiment and so it may undergo modifications without this supposing an alteration of the basis of said invention. Such modifications may be carried out to the form, size and/or the materials it is made of.

## Claims

1. Free exit adaptor to connect consumption devices to containers containing liquefied petroleum gases, in particular conventional refillable bottles, the adaptor consisting of a body (1) which has a lower chamber (2) for coupling to the exit valve of the container bottle with the help of a ring (3) movable manually in a vertical direction against the action of a spring (4), the body also consisting of, in its upper end, a threaded nozzle (13) connecting it to the consumption device, equipped with watertight closure elements to allow gas to pass, made up of a ball bearing (9) pushed by a spring (8) against a watertight washer (16), with this same end of the body being closed by an appropriate lid (12), and also including, as an element to activate the valve on the container bottle, a vertically movable axial rod (7), which goes into the chamber (2) to activate the said exit valve and which is connected to a radial cross passage (17), extended radially towards the inside,
**characterised in that** the device also has means to activate the axial rod (7) to open and close the exit valve of the gas container bottle, means consisting of a cross-sectional rod (19), held inside said radial cross passage (17) capable of moving along it, configured so that it has a middle cylindrical section with a greater diameter, and going on from it towards the interior, a tapered section (30), which can act on the head of the axial rod (7) depending on the position attained by said cross-sectional rod (19), while near the opposite end it has a cross-sectional hole (21) ready to allow the introduction of a pin (22); and a ferrule (24) equipped with a blind axial hole to house the most external part of the rod (19), along with a spring (25) fixed to this extreme portion of the rod (19) and whose recoverable elastic action pushes said rod inside, the ferrule being equipped with an external ring-shaped expansion (26) that serves as a stop to the introduction of the ferrule into the cross passage (17) of the body (1);
and **in that** said ferrule (24) has an assistant opening (29), made as a wide opening in a flat external portion of said ferrule, this opening being ready to house the pin (22) inside and allow this pin to move along it.

2. Adaptor according to claim 1, **characterised in that** said means of operating also include a lever (23) designed so that the edge of the coupling has two parallel and separate walls, ready to allow said lever to sit astride the levelled external portion of the ferrule (24), the lever including an assistant hole (28) ready to house the pin (22) linking it to the cross-sectional rod (19).
and **in that** said lever (23) hole (28) has been designed to be in a movable position with respect to its flat middle, with the result that it remains situated much nearer to the side edges than the opposite, so that the two extreme positions of the lever (23) determine two extreme positions of the movable rod (19) through the radial cross passage (17), corresponding respectively to the high position of the axial rod (7) when the valve is closed, and to the low position of the axial rod (7) when the valve is open, after having been progressively moved upwards by the tapered portion (30) of said cross-sectional rod (19).

3. Adaptor according to claim 1, **characterised in that** the radial cross passage (17) is equipped with a rabbet (27) near its mouth, and by the fact that the ferrule (24) includes an elastic projection keeping the ferrule coupled to said radial cross passage (17), said projection being configured in addition with the passage (17) rabbet (27) mentioned above, it couples to.

## Patentansprüche

1. Free-Exit-Adapter, um Konsum-Vorrichtungen mit Behältern zu verbinden, die flüssiges Erdölgas enthalten, in speziellen, herkömmlich wieder auffüllbaren Flaschen, wobei der Adapter aus einem Körper (1) besteht, der eine untere Kammer (2) zur Verbindung mit dem Ausgangsventil der Behälter-Flasche mit Hilfe eines manuell in eine vertikale Richtung gegen den Druck einer Feder (4) beweglichen Ringes (3) besitzt, wobei der Körper ebenso an seinem oberen Ende aus einem Gewindestutzen (13) besteht, der ihn mit der Konsum-Vorrichtung verbindet, ausgestattet mit wasserdichten Verschlusselementen, um es dem Gas zu gestatten, durchzufließen, hergestellt aus einem Kugellager (9), das von einer Feder (8) gegen einen wasserdichten Dichtungsring (16) gedrückt wird, mit diesem gleichen Ende des Körpers durch einen geeigneten Deckel (12) verschlossen ist und ebenso, als ein Element, um das Ventil an der Behälter-Flasche zu aktivieren, ein vertikal bewegliches, axiales Stäbchen (7) einschließt, das in die Kammer (2) hinein geht, um besagtes Ausgangsventil zu aktivieren und das mit einem radialen Quer-Durchgang (17) verbunden ist, radial zum Innern hinein reichend, **dadurch gekennzeichnet, dass** die Vorrichtung ebenfalls Mittel besitzt, um das axiale Stäbchen (7) zum Öffnen und zum Schließen des Ausgangsventils der Gas-Behälter-Flasche zu aktivieren, wobei die Mittel aus einem Querschnitts-Stäbchen (19) bestehen, das in besagtem radialen Quer-Durchgang (17) enthalten ist, fähig sich ihm entlang zu bewegen, so konfiguriert, dass es einen mittleren zylindrischen Abschnitt mit einem größeren Durchmesser besitzt und von ihm fortfahrend hin zum Innern einen verjüngten Abschnitt (30) besitzt, der abhängig von der von dem besagten Querschnitts-Stäbchen (19) erreichten Position, auf dem oberen Ende des axialen Stäbchens (7) wirken kann, während es nahe dem gegenüber liegenden Ende ein Querschnitts-Loch (21) besitzt, das bereit ist, die Einführung eines Stifts (22) zu gestatten, und einen Metallring (24) besitzt, der mit einem axialen Grundloch ausgestattet ist, um den äußersten Teil des Stäbchens (19) neben einer Feder (25) unterzubringen, die an dem End-Teilstück des Stäbchens (19) befestigt ist und deren wieder herstellbarer elastischer Druck besagtes Stäbchen nach innen drückt, wobei der Metallring mit einer externen, ringförmigen Expansion (26) ausgestattet ist, die als Sperre der Einführung des Metallrings in den Quer-Durchgang (17) des Körpers (1) dient; und dadurch, dass besagter Metallring (24) eine Hilfsöffnung (29) besitzt, die als eine weite Öffnung in einem flachen, externen Teilstück des besagten Metallrings gemacht ist, wobei diese Öffnung bereit ist, den Stift (22) innen unterzubringen und diesem Stift zu gestatten, sich ihr entlang zu bewegen.

2. Adapter nach Anspruch 1, **dadurch gekennzeichnet, dass** besagte Betätigungsmittel ebenso einen Hebel (23) einschließen, der so gestaltet ist, dass der Rand der Verbindung zwei parallele und getrennte Wände besitzt, die bereit sind, dem besagten Hebel zu gestatten, rittlings auf dem nivellierten äußeren Teilstück des Metallrings (24) zu sitzen, wobei der Hebel ein Hilfsloch (28) einschließt, das bereit ist, den Stift (22) unterzubringen, indem es ihn mit dem Querschnitts-Stäbchen (19) verbindet und dadurch, dass besagter Hebel (23) Loch (28) gestaltet wurde, um hinsichtlich seiner flachen Mitte in einer beweglichen Position zu sein, mit dem Ergebnis, dass er näher als der Gegenpart zu den Seitenrändern hin situiert bleibt, so dass die beiden Endpositionen des Hebels (23) die Endpositionen des durch den radialen Quer-Durchgang (17) beweglichen Stäbchens (19) bestimmen, jeweils entsprechend der hohen Position des axialen Stäbchens (7), wenn das Ventil geschlossen ist, und der niedrigen Position des axialen Stäbchens (7), wenn das Ventil geöffnet ist, nachdem sie progressiv von dem verjüngten Abschnitt (30) des besagten Querschnitt-Stäbchens (19) nach oben bewegt wurden.

3. Adapter nach Anspruch 1, **dadurch gekennzeichnet, dass** der radiale Quer-Durchgang (17) mit einer Falz (27) nahe seiner Mündung ausgestattet ist und durch die Tatsache, dass der Metallring (24) eine elastische Projektion einschließt, die den Metallring mit besagtem radialen Quer-Durchgang (17) verbunden hält, wobei besagte Projektion ergänzend zu dem oben erwähnten Durchgang (17) Falz (27), mit dem sie verbunden ist, konfiguriert ist.

## Revendications

1. Raccord libre sortie pour raccorder des installations de consommation à des conteneurs contenant des gaz de pétrole liquéfiés, en particulier des bouteilles conventionnelles à remplissages multiples, le raccord étant constitué d'un corps (1) qui a une chambre inférieure (2) pour être reliée à la vanne de sortie de la bouteille conteneur à l'aide d'une bague (3) déplaçable manuellement dans une direction verticale contre l'action d'un ressort (4), le corps étant également constitué, à son extrémité supérieure, d'une embase filetée (13) reliée à l'installation de consommation, équipée d'éléments de fermeture étanches pour permettre le passage du gaz, constituée d'un roulement à billes (9) poussé par un ressort (8) contre une rondelle étanche (16), la même extrémité du corps étant fermée par un couvercle adapté (12), et incluant également, en tant qu'élément pour activer la vanne sur la bouteille conteneur, une tige axiale déplaçable verticalement (7), qui va dans la chambre (2) pour activer ladite vanne de sortie et qui est reliée à un passage radial (17), à extension radiale vers l'intérieur,
**caractérisé en ce que** l'installation a également les moyens d'activer la tige axiale (7) pour ouvrir et fermer la vanne de sortie de la bouteille conteneur de gaz, moyens consistant en une tige transversale (19), tenue à l'intérieur dudit passage radial (17), capable de bouger le long de celui-ci, configurée de telle façon à avoir une section cylindrique au milieu avec un plus grand diamètre, et à partir de là vers l'intérieur, une section décroissante (30), qui peut agir sur la tête de la tige axiale (7), en fonction de la position atteinte par ladite tige transversale (19), tandis qu'à proximité de l'extrémité opposée, il y a un trou transversal (21) prêt à recevoir l'introduction d'une broche (22) ; et une virole (24) équipée d'un trou axial borgne pour recevoir la majeure partie extérieure de la tige (19), avec un ressort (25) fixé sur cette partie extrême de la tige (19) et dont l'action élastique récupérable pousse ladite tige à l'intérieur, la virole étant équipée d'une détente externe annulaire (26) qui sert d'arrêt à l'introduction de la virole dans le passage (17) du corps (1) ;
et cette dite virole (24) a une ouverture assistée (29), comme une ouverture large dans une partie extérieure plate de ladite virole, cette ouverture étant prête à loger la broche (22) à l'intérieur et permettant à la broche de se déplacer le long de celle-ci.

2. Raccord, selon la revendication 1, **caractérisé en ce que** lesdits moyens de fonctionnement incluent également un levier (23) conçu de façon à ce que le bord du manchon aie deux parois parallèles et séparées, prêt à permettre audit levier de s'asseoir à cheval sur la partie externe égalisée de la virole (24), le levier incluant un trou assistant (28) prêt à loger la broche (22) en la reliant à la tige transversale (19).
et dans ledit levier (23), un trou (28) a été conçu pour être dans une position réglable par rapport à son milieu plat, le résultat étant qu'il reste situé beaucoup plus proche des bords latéraux que des bords opposés, de telle façon que les deux positions extrêmes du levier (23) déterminent deux positions extrêmes de la tige déplaçable (19) à travers le passage radial (17), correspondant respectivement à la position haute de la tige axiale (7) lorsque la vanne est fermée, et à la position basse de la tige axiale (7) lorsque la vanne est ouverte, après avoir été progressivement déplacée vers le haut par la section décroissante (30) de ladite tige transversale (19).

3. Raccord selon la revendication 1, **caractérisé en ce que** le passage radial (17) est équipé d'une feuillure (27) près de sa bouche, et par le fait que la virole (24) inclut une projection élastique gardant la virole reliée au dit passage radial (17), ladite projection étant configurée en plus de la feuillure (27) du passage (17) mentionnée ci-dessus auquel elle est reliée.
